# EUROPEAN PATENT APPLICATION

(11) **EP 0 816 804 A1**
(43) Date of publication of application: **07.01.1998**
(21) Application number: 97830209.9
(22) Date of filing: 02.06.1997
(51) Int. Cl.: G01C 21/20

(54) **Vehicle navigation system with portable personal computer**

(30) Priority: 27.06.1996 IT TO960548
(71) Applicant: MAGNETI MARELLI S.p.A., 20145 Milano (IT)
(72) Inventor: Righetti, Fabrizio, 10122 Torino (IT)
(74) Representative: Notaro, Giancarlo

(57) **Abstract**

In a motor-vehicle navigation system, the only portion installed permanently on-board the motor-vehicle is that constituted by the sensor means (12-18) used for identifying the motor-vehicle position. The computer means with which the system must be provided, the information support means (digitalized maps), and the user interface means (video, keyboard, speaker) are all replaced by a multimedial portable Personal Computer which can be interfaced to the sensor box (10).

## Description

The present invention relates to motor-vehicle navigation systems of the type comprising:
- computer means,
- relative displacement and relative direction sensor means, located on-board the motor-vehicle, for providing said computer means with data useful for the determination (dead reckoning) by said computer means of the position and direction of the motor-vehicle,
- information support means, associated with said computer means, containing a database of maps of a territory on which the motor-vehicle has to travel,
- in which said computer means are adapted to refine the localisation of the motor-vehicle position carried out on the basis of the data from said sensor means, by a comparison operation (map matching) between the position located thereby and the map of the territory included within said database,
- a GPS receiver, also on-board the motor-vehicle, fro providing said computer means with data indicative of the absolute position and the absolute speed (with respect to value and direction) of the motor-vehicle,
- user interface means, for providing the latter with optical and/or acoustical signals for assistance in navigation, which are processed by said computer means on the basis of the information coming from said sensor means, said GPS receiver and on the basis of the information included within said database.

According to the conventional art, said computer means are constituted by a computer permanently installed on-board the motor-vehicle, having a mass memory (CD-ROM) for a digitalized database of the maps of the territory. On the vehicle there are further provided a video display, a keyboard and a system for vocal synthesis, constituting the interface means between the system and the user. All the said components contribute to about 70-80% of the overall cost of a motor-vehicle navigation system. In spite of this, the use factor of the computer on-board the vehicle is not very high, since the actual advantage of the navigation function is limited to the case in which the driver is operating in a non well known environment.

The object of the present invention is that of providing a navigation system of the type indicated at the beginning which has a portion installed on-board the motor-vehicle dramatically simpler and of lower cost with respect to the known systems used up to now.

In view of achieving this object, the invention provides a navigation system of the above indicated type, characterized in that said computer means, said information support means and said interface means are constituted by a multimedial portable Personal Computer, said sensor means and said GPS receiver constituting the only part of the system which is permanently installed on-board the motor-vehicle.

By the expression "Multimedial portable Personal Computer" reference is made herein to any portable computer, including the auxiliary components thereof (keyboard, video, CD-ROM reader, vocal synthesis system).

In a preferred embodiment, there is provided a sensor unit installed on-board the motor-vehicle, including interface means for the relative displacement sensor means, as well as the relative direction sensor means and the associated interface means, and a microcomputer for pre-processing the signals coming from said interface means for the relative displacement and relative direction sensor means. According to a further preferred feature, this sensor unit also includes a GPS receiver. The portion installed on-board the motor-vehicle is therefore constituted by a single unit which can be interfaced with the portable Personal Computer.

The advantage of the invention is mainly constituted by the reduction of cost of the fixed portion installed on-board the motor-vehicle. Furthermore, the interface means include a video display which has the typical size of that of a portable Personal Computer (9"-10") instead of 4"-5" as it is usual for video displays permanently installed on-board motor-vehicles. Furthermore, the system thus benefits of higher processing speeds, due both to the greater speed of the CD-ROM, and to the greater calculation power of present Personal Computers with respect to what, for reason of cost, is possible to install on a dedicated navigation system.

Further features and advantages of the invention will become apparent from the description which follows with reference to the annexed drawings, given purely by way of non-limiting example, in which:
figure 1 is a diagrammatic perspective view of a motor-vehicle provided with a navigation system according to the prior art, and
figure 2 is a block diagram of the navigation system according to the invention.

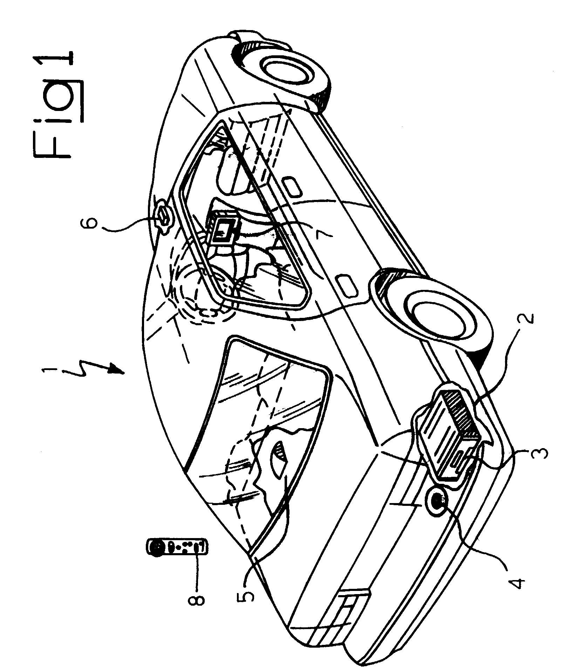

In figure 1, numeral 1 generally designates a motor-vehicle provided with a known navigation system, comprising a computer 2, including a relative direction sensor, typically a rate gyro and a reader 3 for a CD-ROM 4, which can be conveniently housed within the rear luggage compartment of the motor-vehicle. Reference numerals 5 and 6 respectively designate a GPS satellite receiver and an odometer, i.e. a sensor of the travelled distance, of a type known per se. On the motor-vehicle dashboard there is mounted the video display 7, including a speaker, and the driver uses a remote control 8, or alternatively a keyboard for activating the various system functions. The CD-ROM 4 includes a database of digitalized maps of the road network of interest.

In the case of the system according to the invention, the only part installed on-board the motor-vehicle is that constituted by the odometer 6, the GPS receiver 5 and the rate gyro, which is separated from the computer structure. On the contrary, the computer, the CD-ROM reader, the video display, the speaker and the keyboard are not installed on-board the motor-vehicle. All said components are indeed replaced by a multimedial portable Personal Computer which can be interfaced with said sensor means (odometer and rate gyro) and the GPS receiver installed on-board the motor-vehicle.

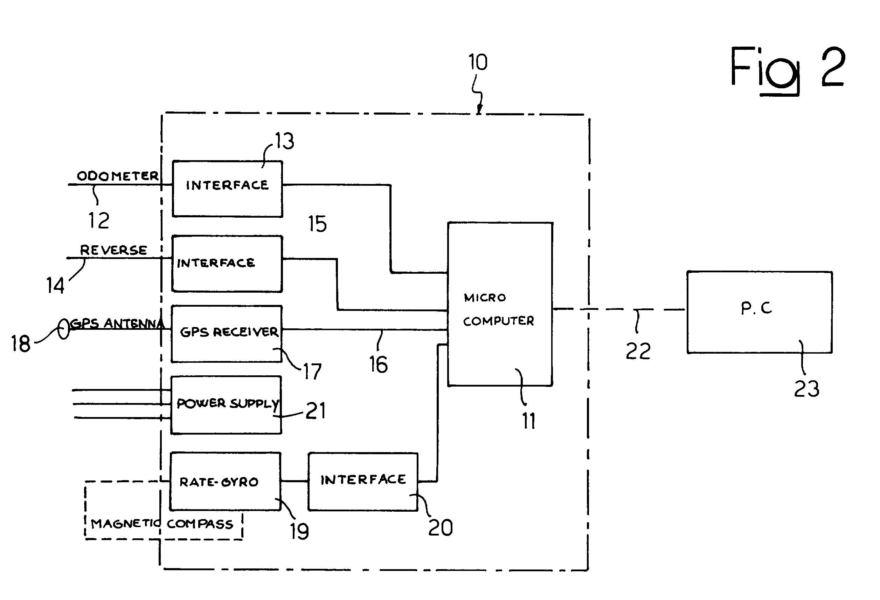

More in detail, with reference to figure 2, which shows a block diagram of the system according to the invention, reference numeral 10 designates the portion permanently installed on-board the motor-vehicle, constituted by a sensor box, including a microcomputer 11 which receives the signal 12 from the odometer through interface means 13, signal 14 of engaged reverse gear, which is requested for correcting the information from the odometer during the rearward movement of the motor-vehicle, through interface means 15, signal 16 coming from the GPS receiver 17, connected to a GPS antenna 18 and the signal coming from the rate gyro 19, through interface means 20. The box 10 further includes a transformer 21 with the usual connections to the battery, the ignition key and mass. The output of the microcomputer can be connected through a serial/parallel line 22 to a portable Personal Computer 23, of a multimedial type, provided with a CD-ROM reader.

It is to be noted that the GPS receiver 17, which in the diagram of figure 2 is shown inside the sensor box, could be also located outside thereof and connected directly to the multimedial PC 23. There are indeed GPS receivers on the market which are in PCMCIA format and can be plugged within the suitable housing slots provided in most modern PCs.

Naturally, moreover, the relative position and relative direction sensors could be of any type. In particular, in place of the rate gyro, it is possible to obtain similar information by at least two other alternative technologies: by using a geomagnetic sensor (compass), which directly provides an information on the direction with respect to the magnetic North; or by using signals coming from a differential odometer, i.e. signals indicative of the distance travelled by the right wheel and the left wheel of the vehicle separately, which enables an information on the variation of the direction angle to be obtained.

As already indicated, the video display of the system is constituted, according to the main idea of solution, by the video of the portable PC. However, it is possible to provide for the use of a dedicated display, connected to the PC and installed in a semi-fixed fashion on the vehicle.

The advantage of the system according to the invention is clearly apparent from the foregoing: the portion of the system which is installed on-board the motor-vehicle is limited to the sensors and the means for conditioning and pre-processing the signals from the sensors. The computer and the man-machine interface portion, as well as the mass memory including the map database are constituted instead by the portable PC 23, which enables a great reduction of the cost of the system to be installed on-board to be obtained. In other words, according to the invention, the motor-vehicle is simply adapted for the use of a navigation system by installing the sensor box 10, without installing thereon an independent and dedicated computer which would have a high cost.

In order to allow a use of portable PC as wider as possible, it is essential that the interface 22 provided on the sensor box 10 is of a standard type and compatible with the standard inputs of Personal Computers. A serial interface EIA RS232 or, in the near future, an interface USB (UNIVERSAL STANDARD BUS) are adapted to this purpose.

Naturally, while the principle of the invention remains the same, the details of construction and the embodiments may widely vary with respect to what has been described and illustrated purely by way of example, without departing from the scope of the present invention.

## Claims

1. Motor-vehicle navigation system, comprising:
- computer means (23),
- relative displacement sensor means (12, 13) and relative direction sensor means (19, 20), located on-board the motor-vehicle, for providing said computer means (23) with data useful for the determination (dead reckoning) by said computer means (23) of the position and direction of the motor-vehicle,
- information support means, associated with said computer means (23), including a database of maps of the territory on which the motor-vehicle has to travel,
- in which said computer means (23) are adapted for refining the localisation of the position of the motor-vehicle carried out on the basis of the data of said sensor means (12, 13, 19, 20), with a comparison operation (map matching) between the position evaluated thereby and the map of the territory included within said database,
- a GPS receiver (17), also on-board the motor-vehicle, for providing said computer means (23) with data indicative of the absolute position and the absolute speed (with respect to value and direction) of the motor-vehicle,
- user interface means (23) for providing the latter with optical and/or acoustical signals for assistance in navigation, which are processed by said computer means (23) on the basis of the information coming from said sensor means (12, 13, 19, 20), said GPS receiver (17) and on the basis of the information contained within said database,
characterized in that said computer means, said information support means and said interface means are constituted by a multimedial portable Personal Computer, said sensor means and said GPS receiver constituting the only portion of the system installed permanently on-board the motor-vehicle.

2. Navigation system according to claim 1, characterized in that it includes a sensor unit installed on-board the motor-vehicle including both interface means (13) for the relative displacement sensor means (12), and the relative direction sensor means (19) with the associated interface means (20) as well as a microcomputer (11) for pre-processing the signals coming from said interface means (13, 20).

3. Navigation system according to claim 2, characterized in that said sensor unit (10) further includes the GPS receiver (17).

4. Navigation system according to claim 3, characterized in that said microcomputer (11) is provided with a standard interface which is compatible with the standard inputs of a portable Personal Computer.
